(19) Europäisches Patentamt / European Patent Office / Office européen des brevets

(11) **EP 4 257 229 A1**

(12) **EUROPEAN PATENT APPLICATION**
published in accordance with Art. 153(4) EPC

(43) Date of publication:
**11.10.2023 Bulletin 2023/41**

(21) Application number: **21900692.1**

(22) Date of filing: **03.12.2021**

(51) International Patent Classification (IPC):
**B01D 63/02** (2006.01)    **B01D 65/10** (2006.01)
**B01D 69/02** (2006.01)    **B01D 69/08** (2006.01)
**B01D 71/10** (2006.01)    **G01M 3/26** (2006.01)
**D01F 2/00** (2006.01)    **D01F 2/04** (2006.01)

(52) Cooperative Patent Classification (CPC):
**B01D 63/02; B01D 65/10; B01D 69/02;
B01D 69/08; B01D 71/10; D01F 2/00; D01F 2/04;
G01M 3/26**

(86) International application number:
**PCT/JP2021/044385**

(87) International publication number:
**WO 2022/118943 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.12.2020 JP 2020202097**

(71) Applicant: **Asahi Kasei Medical Co., Ltd.
Tokyo 100-0006 (JP)**

(72) Inventors:
• **YOSHIDA, Masahiro
  Tokyo 100-0006 (JP)**

• **NAKASHIMA, Shota
  Tokyo 100-0006 (JP)**
• **HIMENO, Shohei
  Tokyo 100-0006 (JP)**
• **KAJIYAMA, Kosuke
  Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **POROUS HOLLOW-FIBER MEMBRANE AND METHOD FOR TESTING INTEGRITY**

(57) The purpose of the invention is to provide a porous hollow-fiber membrane containing a regenerated cellulose and having an elastic limit pressure of 200 kPa or more.

## Fig. 1

**Description**

Technical Field

The present invention relates to a porous hollow-fiber membrane containing a regenerated cellulose and an integrity test method of a membrane module filled with the porous membrane.

Background Art

As a measure for improving the safety, against viruses, of plasma-derived therapies derived from the human blood and biological preparations such as biopharmaceuticals, a virus removal/inactivation step has been introduced in their production steps. Particularly, a virus removal method by filtration with a porous membrane is an effective method capable of reducing viruses without denaturing a useful protein. A porous membrane containing a regenerated cellulose is characterized by less adsorption of a protein to the membrane due to excellent hydrophilicity and therefore has been used widely for virus removal from various biological preparations (refer to, for example, Patent Documents 1 and 2) .
In the virus removal method by filtration with a porous membrane, in order to secure the safety of pharmaceuticals after production, an integrity test of a membrane module is required for confirming that a virus removal membrane effectively functions in a virus removal step.
In the case where a pore having a large pore size outside the pore size distribution which the porous membrane originally has, for example, a pinhole having a diameter of about 100 um is generated, deterioration in virus removal properties of the membrane cannot be found by evaluation using virus substitute fine-particles. On the other hand, it is known that by a leak test at a test pressure of 1 kgf/cm$^2$ (98 kPa) as an integrity test method of a membrane module of a porous hollow-fiber membrane which is composed of a cuprammonium-process regenerated cellulose and has an average pore size of 35 nm, deterioration in virus removal performance can be evaluated (refer to, for example, Patent Document 3).
Examples of an integrity test method of a membrane module include a leak test or diffusion test for determining a pinhole diameter allowed for desired virus removal performance and confirming that there occurs no defect having a size equal to or larger than the pinhole diameter. In a virus removal membrane for removing a parvovirus having a diameter of about 20 nm, it is necessary to set a test pressure high in a leak test or the like because pinholes which affect on the deterioration of virus removal properties are minute. An integrity test using such a method is however limited to a porous membrane composed of polyvinylidene fluoride, polysulfone-based synthetic polymer, or the like.

Citation List

Patent Documents

    Patent Document 1: WO/2015/156401
    Patent Document 2: WO/2017/170874
    Patent Document 3: Japanese Patent Application Laid-Open No. Hei 7-132215

Summary

Technical Problem

An object of the present invention is to provide a porous hollow-fiber membrane containing a regenerated cellulose which membrane enables evaluation of improved particle removal property by a leak test or the like. Another object of the present invention is to provide an integrity test method of a membrane module containing the porous hollow-fiber membrane by using a leak test method.

Solution to Problem

As described above, in a leak test or the like, in a virus removal membrane for removing a parvovirus having a diameter of about 20 nm, a pinhole affecting deterioration in its virus removal properties is so minute that it is necessary to set a test pressure of a leak test or the like high in order to enhance the detection accuracy of such a minute pinhole. An integrity test using such a method can however be performed only for a porous membrane composed of polyvinylidene fluoride or polysulfone-based synthetic polymer. When a test pressure is set high for enhancing the detection accuracy of a minute pinhole of a regenerated cellulose membrane, the regenerated cellulose membrane cannot withstand such a test pressure, which is a problem to be overcome.

The present inventors have carried out an intensive investigation with a view to overcoming the above-described problem. As a result, we have found that the problem is overcome by setting an elastic limit pressure of a porous hollow-fiber membrane containing a regenerated cellulose at a pressure equal to or higher than a particular value. They have also found that by providing such a regenerated cellulose-containing porous hollow-fiber membrane, the detection accuracy of a minute pinhole or the like in the regenerated cellulose-containing porous hollow-fiber membrane can be enhanced in an integrity test method by a leak test method using a membrane module containing the porous hollow-fiber membrane, leading to the completion of the present invention.

Described specifically, the details of the present invention are as follows.

[1] A porous hollow-fiber membrane containing a regenerated cellulose and having an elastic limit pressure of 200 kPa or more.

[2] The porous hollow-fiber membrane as described in [1], wherein a ratio (R/t) of an inner diameter (R) to a membrane thickness (t) of the porous hollow-fiber membrane is 8.4 or less.

[3] The porous hollow-fiber membrane as described in [1] or [2], wherein the membrane thickness (t) of the porous hollow-fiber membrane is in a range of 20 um or more and 70 um or less.

[4] The porous hollow-fiber membrane as described in any of [1] to [3], wherein the regenerated cellulose is obtained by a cuprammonium process.

[5] The porous hollow-fiber membrane as described in any of [1] to [4], wherein a pore size of an inner surface of the porous hollow-fiber membrane is larger than a pore size of an outer surface.

[6] The porous hollow-fiber membrane as described in any of [1] to [5], wherein the porous hollow-fiber membrane has a gradient structure in which a pore size becomes smaller from the inner surface side to the outer surface side.

[7] The porous hollow-fiber membrane as described in any of [1] to [6], wherein a water permeability at a filtration pressure of 27 kPa and 37°C is 10 L/(m$^2$·hr) or more and 50 L/(m$^2$·hr) or less.

[8] The porous hollow-fiber membrane as described in any of [1] to [7], wherein a bubble point is 1.2 MPa or more.

[9] The porous hollow-fiber membrane as described in any of [1] to [8], which is used for virus removal.

[10] The porous hollow-fiber membrane as described in [9], wherein a parvovirus removal ratio (LRV) is 4.0 or more.

[11] A method of filtering a biological preparation-containing liquid with the porous hollow-fiber membrane as described in any one of [1] to [10], wherein a transmembrane pressure difference of the porous hollow-fiber membrane during filtration is 150 kPa or more.

[12] The filtration method as described in [11], wherein the biological preparation-containing liquid contains at least one of immunoglobulin (polyclonal antibody), albumin, blood coagulation factor, prothrombin complex, medium, monoclonal antibody, antibody drug complex, vaccine, recombinant protein, virus vector, DNA, and RNA.

[13] The filtration method as described in [11] or [12], for virus removal.

[14] An integrity test method of a membrane module filled with the porous hollow-fiber membrane as described in any of [1] to [10], wherein:

the membrane module has an outer-surface-side space which is in contact with an outer surface of the porous hollow-fiber membrane and an inner-surface-side space which is in contact with an inner surface of the porous hollow-fiber membrane, and
the method comprises filling the outer-surface-side space with a liquid, and
pressurizing the inner-surface-side space with air so that a transmembrane pressure difference of the porous hollow-fiber membrane is within a range of more than 98 kPa and not more than an elastic limit pressure of the porous hollow-fiber membrane.

[15] An integrity test method of a membrane module filled with a regenerated cellulose-containing porous hollow-fiber membrane, wherein:

the membrane module has an outer-surface-side space which is in contact with an outer surface of the porous hollow-fiber membrane and an inner-surface-side space which is in contact with an inner surface of the porous hollow-fiber membrane, and
the method comprises pressurizing the inner-surface-side space so that a transmembrane pressure difference of the porous hollow-fiber membrane is within a range of 98 kPa or more and not more than an elastic limit pressure of the porous hollow-fiber membrane.

[16] The integrity test method as described in [14] or [15], wherein the regenerated cellulose-containing porous fiber membrane has an elastic limit pressure of 200 kPa or more.

[17] The integrity test method as described in any of [14] to [16], wherein a ratio (R/t) of an inner diameter (R) of the porous hollow-fiber membrane to a membrane thickness (t) thereof is 8.4 or less.

[18] The integrity test method as described in any of [14] to [17], wherein the porous hollow-fiber membrane is a virus removal membrane.

[19] The integrity test method as described in any of [14] to [18], further comprising a step of visually observing an air bubble generated from the porous hollow-fiber membrane.

[20] The integrity test method as described in any of [14] to [18], further comprising a step of measuring a pressure fluctuation value of either one of the outer-surface-side space and the inner-surface-side space or a step of measuring an air inflow amount required for maintaining a pressure of either one of the spaces constant.

Advantageous Effects of Invention

The present invention provides a regenerated-cellulose-containing porous hollow-fiber membrane which enables evaluation of high virus removal performance by a leak test or the like. The present invention also provides an integrity test method of the porous hollow-fiber membrane by a leak test.

Brief Description of Drawings

Fig. 1 is a schematic view of the membrane cross-section of a porous hollow-fiber membrane, showing a relation of the porous hollow-fiber membrane between an inner diameter (R) and membrane thickness (t).

Fig. 2 is a graph used for the determination of an elastic limit pressure of the porous hollow-fiber membrane of Example 1.

Fig. 3 is an image of the porous hollow-fiber membrane of Example 1 observed with a scanning microscope.

Fig. 4 is an image of the porous hollow-fiber membrane of Example 2 observed with a scanning microscope.

Fig. 5 is an image of the porous hollow-fiber membrane of Example 3 observed with a scanning microscope.

Fig. 6 is an image of the porous hollow-fiber membrane of Example 4 observed with a scanning microscope.

Fig. 7 is a graph showing the correlation between a ratio (R/t) of the inner diameter (R) of a porous hollow-fiber membrane to the thickness (t) thereof, and an elastic limit pressure.

Description of Embodiments

The present invention will hereinafter be described in detail based on a specific embodiment (which will hereinafter be called "present embodiment"). The present invention is not restricted by the following embodiment but can be performed in any form without departing from the gist of the present invention.

A regenerated cellulose-containing porous hollow-fiber membrane according to the present embodiment will next be described.

The porous hollow-fiber membrane according to the present embodiment is a hollow-state membrane having a porous structure containing a plurality of pores that allow a material to pass through or trap it therein. The porous hollow-fiber membrane may have any shape without limitation but may have a cylindrical continuous shape. In the present specification, the surface of the porous hollow-fiber membrane present inside of the cylinder will be called "inner surface" and the surface present outside the cylinder will be called "outer surface".

The porous hollow-fiber membrane according to the present embodiment is not particularly limited insofar as it is a porous hollow-fiber membrane containing a regenerated cellulose. The regenerated cellulose is not particularly limited insofar as it is obtained by shaping a stock solution obtained by dissolving natural cellulose by chemical treatment and then regenerating the resulting product by another chemical treatment. Examples include a regenerated cellulose obtained by a process of preparing it from a cuprammonium cellulose solution (cuprammonium process) and that obtained by a process of saponifying cellulose acetate with an alkali (saponification process).

The porous hollow-fiber membrane of the present embodiment may contain a component other than the regenerated cellulose or may contain a partially modified regenerated cellulose. Examples include a regenerated cellulose having a cellulose hydroxyl group modified by esterification and a partially crosslinked regenerated cellulose. The surface of the porous hollow-fiber membrane may be coated with a polymer film. Examples of the polymer used for coating include polyhydroxyethyl methacrylate, a copolymer of 2-hydroxyethyl methacrylate and acrylamide, polymethoxyethyl acrylate, a copolymer of 2-hydroxyethyl methacrylate and diethylaminoethyl methacrylate, a copolymer of 2-methacryloyloxyethyl phosphorylcholine and n-butyl methacrylate, a copolymer of 2-(N-3-sulfopropyl-N,N-dimethylammonium)ethyl methacrylate and n-butyl methacrylate, and a copolymer between hydroxypropyl cellulose, polyvinylpyrrolidone, or vinylpyrrolidone and vinyl acetate.

The porous hollow-fiber membrane of the present embodiment is not particularly limited insofar as it is a porous hollow-fiber membrane which enables the evaluation of improved virus removal performance or the detection of a minute pinhole in an integrity test such as leak test. Examples include a porous hollow-fiber membrane showing an elastic limit pressure equal to or more than a specific value. Examples of the elastic limit pressure include 200 kPa or more, 210 kPa or more, 220 kPa or more, 230 kPa or more, 240 kPa or more, and 250 kPa or more. In another mode of the elastic limit pressure, examples include 215 kPa or more, 225 kPa or more, 235 kPa or more, 245 kPa or more, 255 kPa or more, 270 kPa or more, and 280 kPa or more. The upper limit of the elastic limit pressure is not particularly limited insofar as it is a pressure which can be actually applied and examples include 1000 kPa or less, 900 kPa or less, 800 kPa or less, 700 kPa or less, 600 kPa or less, 500 kPa or less, 450 kPa or less, 400 kPa or less, 350 kPa or less, and 300 kPa or less.

The term "elastic limit pressure" is defined as a pressure at the time when expansion observed from a change in the outer diameter of a hollow-fiber membrane shows deviation from a linear change due to a pressure increase caused by the pressurization with air of the hollow-fiber membrane from the inner surface side. The deviation of the expansion of the hollow-fiber membrane from a linear change occurs by plastic deformation of the hollow-fiber membrane. In various examinations, filtration, and an integrity test such as leak test in the manufacturing steps of a porous hollow-fiber membrane, it is preferred that no substantial change occurs in the virus removal properties and water permeation of the porous membrane before and after the test and is also preferred that a pressure not more than the elastic limit is selected as a pressure used in the test. The elastic limit pressure of the porous hollow-fiber membrane of the present embodiment is measured while wetting the porous hollow-fiber membrane with water.

The leak test is a method of detecting the presence or absence of a large hole (pinhole) outside the pore size distribution which the porous membrane originally has. The relation among a pinhole diameter at a temperature of 20°C, a test pressure, and a gas flow rate coming from the pinhole can be given by the formula (1) of a choked flow. Therefore, based on the test pressure, the air flow rate coming from a pinhole, and the formula (1), the pinhole diameter can be calculated.

$$Q = 30\pi R^2 \, (P_1 + 0.1) \quad (1)$$

(wherein, Q: flow rate (mL/min), R: pinhole diameter ($\mu$m) at a temperature of 20°C, and $P_1$: test pressure (MPa)).

For making the presence of a smaller pinhole detectable, it is preferred to construct a system of applying a higher pressure on a porous membrane and thereby observing a small change in flow rate. In consideration of an air diffusion amount and detection accuracy thereof in a pore size distribution which the porous membrane originally has, an air flow rate in which the presence of a pinhole can be judged in a leak test is, for example, in a range of 0.2 mL/min or more and 0.5 mL/min or less. At a preset pressure of 200 kPa, the diameter of a detectable minimum pinhole is in a range of 2.7 um or more and 4.2 $\mu$m or less; at a preset pressure of 250 kPa, it is in a range of 2.5 um or more and 3.9 um or less; and at a preset pressure of 300 kPa, it is in a range of 2.3 um or more and 3.6 $\mu$m or less.

The lower limit of the elastic limit pressure of the porous hollow-fiber membrane of the present embodiment is 200 kPa or more, preferably 220 kPa or more, more preferably 250 kPa or more, and still more preferably 300 kPa or more from the standpoint of setting a preset pressure for pressurizing the porous hollow-fiber membrane in a leak test to a range larger than 98 kPa to make detectable a pinhole having a diameter smaller than about 3 um. The upper limit of the elastic limit pressure of the porous hollow-fiber membrane of the present embodiment is preferably not more than a fixed value, for example, 800 kPa or less, preferably 700 kPa or less, more preferably 600 kPa or less, still more preferably 500 kPa or less, and particularly preferably 400 kPa or less from the standpoint of flexibility which is required for obtaining a filter module from the porous hollow-fiber membrane.

It is preferred to adjust the lower limit of the elastic limit pressure of the porous hollow-fiber membrane of the present embodiment to 200 kPa or more, also from the standpoint of increasing the transmembrane pressure difference to more than 150 kPa from about 98 kPa of the transmembrane pressure difference a porous hollow-fiber membrane composed of a regenerated cellulose obtained by the conventional technology.

Setting a transmembrane pressure difference during filtration high has a merit of, in addition to an economic merit of increasing a treatment amount per unit hour, enhancing the virus trapping reliability, because in a virus removal membrane, with an increase in the transmembrane pressure difference during filtration, the physical binding force of a virus to the membrane increases. The transmembrane pressure difference is preferably set at about 75% or less of the elastic limit pressure of the porous hollow-fiber membrane of the present embodiment and therefore, a preferred transmembrane pressure difference during filtration is 165 kPa or more, 188 kPa or more, or 225 kPa or more. Examples of an another mode of the transmembrane pressure difference during filtration include 150 kPa or more, 200 kPa or more, and 250 kPa or more. The upper limit of the transmembrane pressure difference during filtration is not particularly limited insofar as the pressure can be actually applied and examples include 1000 kPa or less, 900 kPa or less, 800 kPa or less, 700 kPa or less, 600 kPa or less, 500 kPa or less, 450 kPa or less, 400 kPa or less, 350 kPa or less, and 300 kPa or less. The transmembrane pressure difference is considered as synonymous with a filtration pressure in low-pressure filtration under conditions where no particularly high filtration exhaust pressure is applied. As a control means of the transmembrane pressure difference, a filtration object may be pressure-fed so that a constant pressure is applied to the porous hollow-fiber membrane or a filtration object may be filtered at a fixed rate so as not to exceed the elastic limit pressure of the porous hollow-fiber membrane.

Here, the term "transmembrane pressure difference of the porous hollow-fiber membrane of the present embodiment" means a pressure difference between an inner-surface-side pressure of the porous hollow-fiber membrane and an outer-surface-side pressure of the porous hollow-fiber membrane. It is, for example, a value obtained by subtracting the outer-surface-side pressure of the porous hollow-fiber membrane from the inner surface side pressure of the porous hollow-fiber membrane.

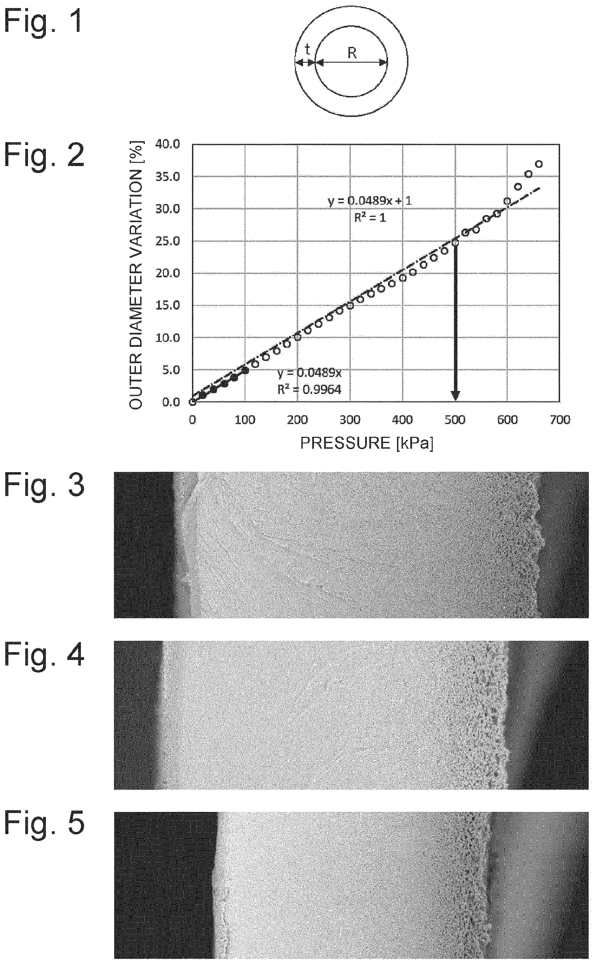

In the porous hollow-fiber membrane of the present embodiment, a ratio (R/t) of an inner diameter (R ($\mu$m)) to a membrane thickness (t (um)) is preferably 8.4 or less. As shown in Fig. 1, the inner diameter (R) and the membrane thickness (t) are determined from a round section sliced from a hollow fiber in dry state. The inner diameter is an inner surface diameter of the hollow fiber and the membrane thickness is a vertical distance of the hollow fiber between the inner surface and the outer surface. Unless otherwise particularly specified, the inner diameter (R) and the membrane thickness (t) are each a value measured in dry state.

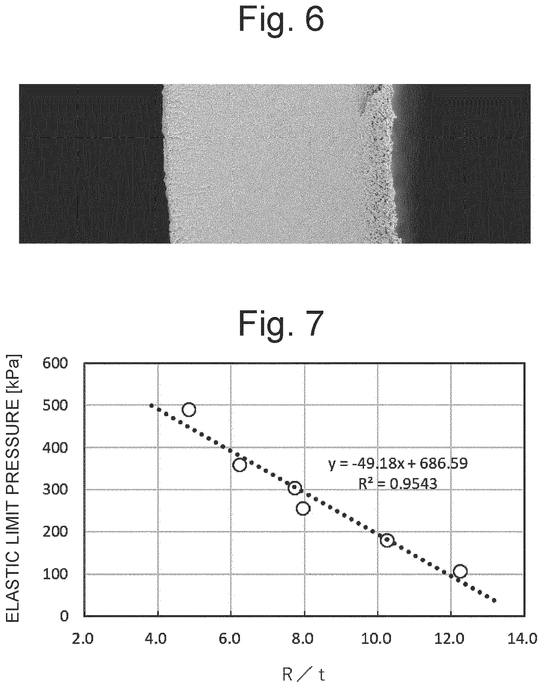

The present inventors have found based on the profile of the porous hollow-fiber membrane that in a regenerated cellulose-containing porous hollow-fiber membrane suited for a filtration object having a particle size of a little less than 20 nm to about 100 nm, there is a specific correlation between R/t, that is, a ratio of the inner diameter (R) of the porous hollow-fiber membrane to the membrane thickness (t) thereof and an elastic limit pressure (refer to Examples 1 to 4 and Comparative Examples 1 and 2 which will be described later, and Fig. 7). From the standpoint of producing a porous hollow-fiber membrane having an elastic limit pressure of 200 kPa or more, the upper limit of R/t is preferably 8.4 or less. A range of R/t corresponding to the aforementioned more preferred lower limit of an elastic limit pressure is more preferably 8.0 or less and still more preferably 7.7 or less. The lower limit of R/t is preferably 2.0, that is, the inner diameter is preferably twice or more the membrane thickness, from the standpoint of stably producing a hollow fiber shape and satisfying, as a hollow fiber filtration membrane, the balance between a supply flow rate and a permeation flow rate.

The membrane thickness of the porous membrane according to the present embodiment is preferably in a range of 20 um or more and 70 um or less. From the standpoint of easily designing a region for trapping a minute material by a sieve effect of the porous membrane, the membrane thickness is preferably 20 um or more. In addition, from the standpoint of easily setting the permeation performance of the porous membrane high, the membrane thickness is preferably adjusted to 70 um or less. The membrane thickness of the porous membrane is more preferably in a range of 30 $\mu$m or more and 60 um or less and still more preferably in a range of 40 $\mu$m or more and 50 $\mu$m or less.

For the porous hollow-fiber membrane of the present embodiment, a regenerated cellulose obtained by a cuprammonium process is preferred from the standpoint of satisfying both a porous structure and excellent hydrophilicity required for a virus removal membrane. The following is an example of a method of producing the porous hollow-fiber membrane of the present embodiment by using a cuprammonium process.

First, prepared are a spinning dope obtained by dissolving cellulose in a cuprammonium solution and having a cellulose concentration of 6 mass% to 8 mass%, an ammonia concentration of 4 mass% to 5 mass%, and a copper concentration of 2 mass% to 3 mass%, an internal coagulation solution which is an aqueous solution having an acetone concentration of 30 mass% to 50 mass% and an ammonia concentration of 0.5 mass% to 1.0 mass%, and an external coagulation solution which is an aqueous solution having an acetone concentration of 20 mass% to 40 mass% and an ammonia concentration of 0.2 mass% or less. The spinning dope may contain an inorganic salt such as sodium sulfate in an amount ranging from 0.03 mass% to 0.1 mass% from the standpoint of adjusting the microphase separation rate of the dope.

Next, it is preferred to eject the spinning dope from an annular double spinneret at a rate of 2 mL/min to 5 mL/min and at the same time, eject the internal coagulation solution at a rate of 0.3 mL/min to 3.0 mL/min from a center spinning outlet provided at the center of the annular double spinneret. For example, for adjusting the membrane thickness of a porous hollow-fiber membrane to be produced to fall within a range of 20 um to 70 um in order to obtain a hollow fiber having an inner diameter and membrane thickness enough to actualize an elastic limit pressure exceeding 200 kPa, it is more preferred to adjust a dope ejection rate to 2.5 mL/min or more and 4 mL/min or less and an internal coagulation rate to 0.3 mL/min or more and 1.6 mL/min or less. In a still more preferred method, the internal coagulation solution rate is adjusted to be 0.3 mL/min or more and 1.4 mL/m or less. The spinning dope and the internal coagulation solution ejected from the annular double spinneret are immediately immersed in the external coagulation solution to coagulate the internal coagulation solution and the external coagulation solution and then the resulting membrane is taken up with a frame.

Examples of the immersion of the spinning dope and the internal coagulation solution in the external coagulation solution include a method of immersing the spinning dope and the internal coagulation solution in the external coagulation solution stored in a coagulating bath, a method of allowing coagulation to proceed while causing them, together with the external coagulation solution, to flow down and drop in a spinning funnel, and a method of using a spinning funnel similarly and also using a U-shaped capillary. Use of a U-shaped capillary is preferred from the standpoint of preventing extension of a coagulation procedure and thereby achieving a membrane structure having a high fine-particle removal ratio.

From the standpoint of forming the porous hollow-fiber membrane of the present embodiment to have a membrane structure capable of stably achieving water flow performance and virus removal performance which will be described later, the temperature of the external coagulation solution is preferably controlled at a predetermined temperature selected from a range of 25°C or more to 45°C or less. A more preferred temperature range is 30°C or more to 45°C or less and a still more preferred range is 35°C or more to 45°C or less.

A hollow-fiber membrane in dry state is obtained by immersing the hollow-fiber membrane thus taken up in a 2 mass% to 10 mass% dilute aqueous solution of sulfuric acid, washing the resulting membrane with pure water to regenerate cellulose, replacing the water content of the hollow-fiber membrane by an organic solvent such as methanol or ethanol, and drying the hollow-fiber membrane under pressure at 30°C to 60°C and 5 kPa or less while stretching it by 1% to 8% with both ends of a hollow-fiber membrane bundle being fixed.

The filtration method of the present embodiment includes filtering, with the porous hollow-fiber membrane of the present embodiment, a solution to be filtered.

For using the porous hollow-fiber membrane of the present embodiment to effectively trap fine particles in an aqueous solution, a method of carrying out filtration in a liquid flowing direction from the inner surface side to the outer surface side of the hollow fiber (internal pressure filtration method) is preferably employed. From the standpoint of achieving a high flow rate and suppressing clogging of the porous membrane, the pore size of the inner surface is preferably larger than the pore size of the outer surface. Further, from the standpoint of enhancing the trapping performance of fine particles and suppressing the influence of clogging, it is more preferred that the hollow-fiber membrane has a gradient structure in which a pore size becomes smaller from the inner surface side to the outer surface side and at the same time, has a uniform structure with minimal variation in pore size in order to trap fine particles to be removed. The term "pore size" as used herein means a size of a pore portion in an image obtained by observing, with an optical microscope or scanning electron microscope, the inner surface or outer surface of the membrane or a round section sliced from the hollow-fiber membrane. The degree of a difference found by comparison is preferably clear enough to visually recognize it from a microscopic image.

The porous hollow-fiber membrane of the present embodiment is usable for the removal of a virus, which is one of fine particles, and it is particularly suited for use as a removal membrane of parvovirus rated as a small virus among viruses.

When the porous hollow-fiber membrane of the present embodiment is used as a parvovirus removal membrane, the water permeability at a filtration pressure of 27 kPa and 37°C is preferably 10 L/(m$^2$·hr) or more and 50 L/(m$^2$·hr) or less.

The water permeability is a flow rate per unit hour when water is filtered by an internal filtration method and a virus removal membrane designed to have a high water permeability can complete a virus removal step of a biological preparation in a short time. The water permeability is an index showing an average pore size of the entire porous hollow-fiber membrane and is designed depending on the size of a virus particle to be removed. From the standpoint of more reliably providing a membrane with trapping performance of parvovirus having a diameter smaller than 20 nm, the water permeability is more preferably set at 10 L/(m$^2$·hr) or more and 50 L/(m$^2$·hr) or less and still more preferably set at 15 L/(m$^2$·hr) or more and 45 L/(m$^2$·hr) or less. The reason why the water permeability is determined under the specific conditions of a filtration pressure of 27 kPa and 37°C is because these conditions are typical as measurement conditions of a water permeability for the calculation of an average pore size (nm) of a porous membrane in the corresponding technical region.

The water permeability of the porous hollow-fiber membrane of the present embodiment under the conditions of a filtration pressure of 98 kPa and 25°C is preferably 20 L/(m$^2$·hr) or more and 100 L/(m$^2$·hr) or less, more preferably 30 L/(m$^2$·hr) or more and 85 L/(m$^2$·hr) or less.

When the porous hollow-fiber membrane of the present embodiment is used as a parvovirus removal membrane, a bubble point is not particularly limited insofar as it is 1.2 MPa or more. The term "bubble point" as used herein is an index showing the size of a maximum pore of the porous hollow-fiber membrane. From the standpoint of reliably trapping a parvovirus having a diameter smaller than 20 nm, the lower limit of the bubble point is preferably 1.3 MPa or more, more preferably 1.4 MPa or more, and still more preferably 1.5 MPa or more. From the standpoint of achieving the aforementioned water permeability, the upper limit of the bubble point is preferably 2.4 MPa or less, more preferably 2.3 MPa or less, and still more preferably 2.2 MPa or less. It is to be noted that the bubble point is a pressure at the time when a test module is formed by sealing the porous hollow-fiber membrane of the present embodiment at one end to allow pressurization with air or nitrogen from the other end; the resulting test module is boosted while being immersed in a fluorine-based liquid having a low surface tension; and the flow rate of a gas which thereby leaks is 2.4 mL/min.

When the porous hollow-fiber membrane of the present embodiment is used as a virus removal membrane, the virus removal properties of the porous hollow-fiber membrane of the present embodiment are evaluated as a virus removal ratio (LRV: Logarithmic Reduction Value), which is a logarithm of a ratio between a filtrate and a virus-containing solution to be filtered in 50% tissue culture infectious value ($TCID_{50}$/mL).

When the porous hollow-fiber membrane of the present embodiment is used as a parvovirus removal membrane for the filtration of a solution to be filtered containing 6.0 $TCID_{50}$/mL or more and 8.0 $TCID_{50}$/mL or less of parvovirus at a transmembrane pressure difference of 196 kPa and a rate of 150 $L/m^2$, a parvovirus removal ratio is preferably 4.0 or more. The parvovirus removal ratio under the same conditions is more preferably 4.5 or more and still more preferably 5.0 or more in consideration of the handling of a larger filtration amount and influence on a filtration pressure fluctuation. The aforementioned LRV is preferably measured using the virus-containing protein solution described in (5-A) in the LRV measurement method which will be described later in (5) of Examples.

When the porous hollow-fiber membrane of the present embodiment is used as a virus removal membrane, a biological preparation contained in a solution to be purified is not particularly limited. Examples include immunoglobulin (polyclonal antibody), albumin, blood coagulation factor, prothrombin complex, medium, monoclonal antibody, antibody drug complex, vaccine, recombinant protein, virus vector, DNA, and RNA.

A protein such as antibody may be purified using the porous hollow-fiber membrane of the present embodiment. The antibody may be a human antibody or an antibody protein derived from mammals, other than human, such as bovine and mouse. The antibody may also be a chimera antibody protein with human IgG or a humanized antibody. The chimera antibody with human IgG is an antibody having a variable region derived from an organism, other than human, such as mouse and having, as a constant region, an antibody substituted by human-derived immunoglobulin. The term "humanized antibody" means an antibody having, in a variable region thereof, a complementarity-determining region (CDR) derived from an organism other than human and, as the other region, a framework region (FR) derived from human. The humanized antibody has more reduced immunogenicy than the chimera antibody.

The class (isotype) and subclass of an antibody are not particularly limited. For example, an antibody is classified into five classes, that is, IgG, IgA, IgM, IgD, and IgE, depending on a difference in the structure of a constant region. The antibody to be purified by the porous hollow-fiber membrane of the present embodiment may however belong to any of these five classes. In the human antibody, IgG has four subclasses, that is, IgG1 to IgG4 and IgA has two subclasses, that is, IgA1 and IgA2. The subclass of the antibody to be purified by the porous-hollow-fiber membrane of the present embodiment is not limited. An antibody-related protein such as Fc fusion protein having an Fc region to which a protein has been fused may be included in the antibody to be purified by the porous hollow-fiber membrane of the present embodiment.

Further, the antibody can also be classified according to its origin. The antibody to be purified by the porous hollow-fiber membrane of the present embodiment may be any of a natural human antibody, a recombinant human antibody obtained by gene recombination technology, a monoclonal antibody, and a polyclonal antibody. Of these antibodies, a monoclonal antibody is suited, though not limited thereto, as the antibody to be purified by the porous hollow-fiber membrane of the present embodiment from the standpoint of demand or importance as an antibody drug.

Examples of the antibody include monoclonal antibodies and polyclonal antibodies, each containing any of IgM, IgD, IgG, IgA, and IgE. The antibody may be derived from a plasma product or may be derived from a cell culture solution. In order to obtain an antibody by cell culture, animal cells and microorganisms may be used as cells. Animal cells are not particularly limited but examples include CHO cells, Sp2/O cells, NS0 cells, Vero cells, and PER.C6 cells. The kind of microorganisms is not particularly limited and examples include Escherichia coli and yeast.

By using the porous hollow-fiber membrane of the present embodiment as a membrane for filtering off a virus contained in a protein-containing solution to be purified, the protein-containing solution can be filtered at a high transmembrane pressure difference and a high virus removal ratio. The transmembrane pressure difference is preferably set at about 75% or less of the elastic limit pressure of the porous hollow-fiber membrane of the present embodiment and therefore, more preferred examples of the transmembrane pressure difference during filtration include 150 kPa or more, 165 kPa or more, 188 kPa or more, 200 kPa or more, 225 kPa or more, and 250 kPa or more. The upper limit of the transmembrane pressure difference is not particularly limited insofar as it is a pressure to be applied actually. Examples include 1000 kPa or less, 900 kPa or less, 800 kPa or less, 700 kPa or less, 600 kPa or less, 500 kPa or less, 450 kPa or less, 400 kPa or less, 350 kPa or less, and 300 kPa or less.

The porous hollow-fiber membrane provided for filtration has an advantage of an increased filtration amount as a filtration time is set longer. The filtration time is set, for example, at 30 minutes or more, preferably 1 hour or more, more preferably 3 hours or more, and still more preferably 6 hours or more. The upper limit of the filtration time is not particularly limited and examples include 7 days or less, 6 days or less, 5 days or less, 4 days or less, 3 days or less, and 2 days or less.

When the porous hollow-fiber membrane of the present embodiment is used in a virus removal step, another purification step may be added before, after or both of the virus removal step. Examples of an equipment used in the another purification step include a protein A carrier, ion exchange chromatography, depth filter, ultrafiltration membrane, prefilter, and activated charcoal.

As another example of the present embodiment, an integrity test method of a membrane module filled with a porous hollow-fiber membrane will next be described.

A membrane module filled with the porous hollow-fiber membrane of the present embodiment is comprised of a cylindrical body, a lid body, and a potting agent. The hollow-fiber membrane housed inside the cylindrical body is bonded, at both ends thereof, to the cylindrical body with the potting agent and forms a space (which will hereinafter be called "outer-surface-side space") which is in contact with the outer surface of the hollow fiber surrounded by the inner surface of the cylindrical body, the outer surface of the hollow fiber, and one of the surfaces of the potting agent. The outer-surface-side space leads to the outside with a nozzle which the cylindrical body has. In the membrane module, two lid bodies are bonded so that respective predetermined spaces are formed at both ends at which the hollow-fiber membrane and the cylindrical body are bonded with the potting agent and form a space (which will hereinafter be called "inner-surface-side space") which is in contact with the inner surface of the hollow fiber surrounded by the inner surface of the lid body, the inner surface of the hollow fiber, and the other surface of the potting agent. The inner-surface-side space leads to the outside with a nozzle which the lid body has.

The membrane module filled with the porous hollow-fiber membrane of the present embodiment can be used for filtration by feeding a liquid under pressure from the nozzle of the lid body, transferring the liquid through the membrane from the inner-surface-side space to the outer-surface-side space, and collecting the liquid from the nozzle of the cylindrical body.

The integrity test method of the membrane module of the present embodiment - the membrane module having two spaces, that is, the outer-surface-side space in contact with the outer surface of the porous hollow-fiber membrane and the inner-surface-side space in contact with the inner surface of the porous hollow-fiber membrane as described above - includes:

(1) a step of filling the outer-surface-side space with a liquid, and
(2) a step of pressurizing the inner-surface-side space with air to adjust the transmembrane pressure difference of the porous hollow-fiber membrane to be larger than 98 kPa and not larger than the elastic limit pressure of the porous hollow-fiber membrane.

In the integrity test method of the membrane module of the present embodiment, the method of filling the outer-surface-side space of the membrane module with a liquid may be performed by filling the liquid from the nozzle of the cylindrical body of the membrane module or by pouring the liquid from the nozzle of the lid body and filling the space with the liquid by a method similar to that used for filtration work.

The outer-surface-side space of the membrane module is filled with the liquid more preferably by the following procedure from the standpoint of reducing the influence of microbubbles in the porous membrane.

The membrane module is placed in an upright position and the inner-surface-side space is filled with a liquid from the nozzle of the bottom lid body of the membrane module at a flow rate of about 2 L/($m^2$-min). Then, two nozzles which the cylindrical body has are opened at the inner upper side and the outer-surface-side space is filled with the liquid by a filtration operation at a flow rate of about 1 L/($m^2$-min). Lastly, the liquid of the inner-surface-side space is discharged from the nozzle of the bottom lid body of the membrane module.

The liquid used in the integrity test method of the membrane module of the present embodiment is not particularly limited insofar as it does not change the membrane structure of the porous hollow-fiber membrane of the present embodiment. In an integrity test before or after the use of the membrane module, water is preferably used because it can be easily substituted with a liquid to be filtered. Water containing impurities or microair may clog a part of the structure of the porous hollow-fiber membrane and adversely affect the results of the integrity test. Therefore, water treated with an ultrafiltration membrane, a reverse osmosis membrane, a deaeration membrane or the like is preferably used. From the standpoint of performing more precise measurement, a Freon series liquid having a low surface tension may be used.

In the integrity test of the membrane module of the present embodiment, a pressure used for pressurization of the air in the inner-surface-side space is a pressure such that a transmembrane difference pressure of the porous hollow-fiber membrane is more than 98 kPa and a pressure not more than the elastic limit pressure of the porous hollow-fiber.

In the integrity test, by pressurizing the air in the inner-surface-side space at an increased pressure, a pinhole of the porous hollow-fiber membrane can be well precisely detected. Pressurization at a pressure exceeding the elastic limit pressure of the porous hollow-fiber membrane, however, causes plastic deformation of the porous hollow-fiber membrane so that the test is carried out preferably at a pressure not more than or less than the elastic limit pressure, more preferably at about 85% or less of the elastic limit pressure, and still more preferably at about 75% or less.

In the integrity test of a parvovirus removal membrane, it is important that the membrane is judged to have a parvovirus removal ratio of 4.0 or more and the permissible pinhole size of the porous hollow-fiber membrane of the membrane module is experimentally found depending on the membrane area. When the membrane area is 0.001 $m^2$, 0.01 $m^2$, 0.1 $m^2$, or 1 $m^2$, the pinhole size is about 3 $\mu$m, about 6.5 $\mu$m, about 12.5 $\mu$m, or about 33 $\mu$m, respectively.

In an integrity test machine by a leak test which is performed by measuring a pressure fluctuation value or a flow rate, there is a limit in the precision of pinhole judgment as described above. At a preset pressure of 200 kPa, the diameter of a detectable minimum pinhole is in a range of 2.7 um or more and 4.2 $\mu$m or less, at 250 kPa, it is in a range of 2.5 um or more and 3.9 $\mu$m or less, and at 300 kPa, it is in a range of 2.3 um or more and 3.6 $\mu$m or less. A preset pressure is preferably set at 200 kPa or more in the integrity test of a membrane module having a small area.

As a judging method in the integrity test method of the membrane module of the present embodiment, it is preferred to select one from a method of visually observing air bubbles generated from the porous hollow-fiber membrane, a method of measuring a pressure fluctuation value of either one of the two spaces which the membrane module has, and a method of measuring an air inflow amount necessary for maintaining the pressure of either one of the two spaces constant.

The visually observing method is a method of pressurizing the inner-surface-side space with air from the nozzle of one of the lids of the membrane module having an outer-surface-side space filled with a liquid and visually observing the presence of a continuous air bubble which appears when a porous hollow fiber has a defect such as pinhole.

The aforementioned method is a qualitative method, but it is particularly effective for a membrane module having a small membrane area such as 0.001 m$^2$ or 0.01 m$^2$. Such a module cannot be judged with high precision by an air-flow-rate measuring method which will be described later because of an equipment problem.

For judging that a small-membrane-area membrane module having no defects in the porous hollow fiber and having a pore size distribution as designed and thereby achieving a parvovirus removal ratio of 4.0 or more, it is preferred to employ a method of visually observing and finding that pressurization of the inner-surface-side space at a preset pressure of at least 150 kPa or more does not generate a continuous air bubble in the outer-surface-side space for 30 seconds, preferably 60 seconds.

Of the judging method of the integrity test of the membrane module of the present embodiment, a judging method by measuring a pressure fluctuation value of either one of the outer-surface-side space and the inner-surface-side space which the membrane module has or a judging method by measuring an air flow fate necessary for maintaining the pressure of either one of the spaces constant will next be described.

In the aforementioned methods, the membrane module is placed in an upright position and a circuit in which the inner-surface-side space is pressurized with air from the nozzle of the upper lid of the membrane module to discharge the air which has leaked from the upper-side nozzle of the cylindrical body is formed. Depending on these methods, a regulator for pressure control, a flowmeter, and a pressure sensor are disposed on the pressurization side, and a flow meter is disposed on the discharge side. A container communicated to the nozzle of the bottom lid of the membrane module may be placed to relax the influence of the liquid remaining in the porous membrane during measurement.

A pressure change during pressurization of the membrane module or a change in air flow rate, each measured by the aforementioned methods, is a total change of a change of an air diffusion amount inside the porous hollow-fiber membrane and a change due to defects of the porous hollow fiber such as pinhole. For performing the integrity test, it is necessary to measure, in advance, a change caused by air diffusion due to the pore size distribution which the porous membrane originally has and further, to set a margin for preventing misjudgment. A judgment value (threshold value) for a pressure fluctuation value or flow rate variation value for judging whether or not the porous hollow fiber has defects such as pinhole is found experimentally and is not particularly limited. For example, the aforementioned threshold value can be set as needed by carrying out a leak test of a plurality of (for example, nine) membrane modules and considering the average and deviation of the pressure fluctuation value or flow rate variation value.

Examples

The present invention will hereinafter be described more specifically by Examples. The present invention is however not limited by the following Examples and can be performed in any mode without departing from the gist of the present invention.

(1) Method of measuring an elastic limit pressure of a porous hollow-fiber membrane

A measurement module is prepared by sealing one of the ends of one 50-mm long porous hollow-fiber membrane with a curable liquid resin such as urethane resin so as to prevent air leakage and bonding and fixing the other end with a curable liquid resin such as urethane resin so as not to fill its hollow portion therewith while inserting the other end in a Micro Cupla (MC-04PH, product of Nitto Kohki). In addition, a pressure device equipped with Micro Cupla (MC-10SM, product of Nitto Kohki) is prepared to allow a pressure adjustment valve, a gauge meter, and the Micro Cupla as a measurement module to connect to a piping for compressed air supply. The measurement module is connected to the pressure device while being immersed in water and an outer diameter of a hollow fiber is measured with a dimension measurement system (Model "LS-9006M", product of Keyence) when a compressed air is supplied to the hollow portion by increasing the pressure with an interval of 20 kPa. An outer diameter variation (%) at each measurement pressure is calculated based on the following formula and a graph is drawn with an X axis as a measurement pressure (kPa) and a Y axis as an outer diameter variation (%).

Outer diameter variation (%) = $(D/D_0-1) \times 100$ (wherein, D: outer diameter (um) at each pressure and $D_0$: initial outer diameter ($\mu$m) value under non-pressurized conditions).

Next, a regression linear formula (Y=ax) which passes through an origin is found using five values measured at an interval of 20 kPa from 20 kPa to 100 kPa and the formula (Y=aX+1) is introduced by adding 1, which means an extra 1% of an outer diameter variation, to the right side of the formula. The line of the formula thus introduced is added to the aforementioned graph. Of the pressures of the plot not exceeding the outer diameter variation of the line, the highest pressure is determined as an elastic limit pressure of the measurement module.

Test is performed for six or more measurement modules and an average is determined as an elastic limit pressure of the porous hollow-fiber membrane.

(2) Method of measuring an Inner diameter and a membrane thickness

A cross-sectional slice of a porous hollow-fiber membrane is formed and photographed at 200X with a microscope (Model "VHX-5000", product of Keyence) to prepare an image. The membrane thickness of the hollow fiber cross-section of the image is measured at at least 20 positions over the whole periphery and an average of them is determined as a measurement value of a membrane thickness.

An area of the hollow portion of the hollow fiber cross-section of the aforementioned image is found by image processing and an inner diameter is calculated as a diameter of an approximated circle.

(3) Method of measuring the water permeability of a porous hollow-fiber membrane

A measurement module is prepared by bundling 10 porous hollow-fiber membranes, attaching a polyethylene tube connectable to a water permeability analyzer to one end of the bundle with an adhesive, and sealing the other end of the hollow fiber while adjusting the effective length to 16 cm.

The water permeability analyzer is equipped with a mechanism for ejecting water, at a predetermined pressure, from a conduit portion to which the polyethylene tube of the measurement module is connectable, a mechanism capable of determining the quantity of the ejected liquid with high precision, a mechanism for measuring a determination time of the quantity of the ejected liquid, a bath in which the measurement module is immersed, and a mechanism for controlling the temperature of the ejected water and bath water.

The measurement module is immersed in a water bath of 37°C and the conduit portion of the water permeability analyzer is connected to the polyethylene tube of the measurement module. Then, time required for passing 1 mL of 37°C water at 27 kPa is measured. Using a filtration membrane area calculated based on the measurement result of an inner diameter (um) of a porous hollow-fiber membrane formed under conditions similar to those for the porous hollow-fiber membrane of the measurement module and the time for passing 1 mL of water thus measured, a water permeability ($L/(m^2 \cdot hr)$) per $m^2$ of a membrane area and per hour is calculated.

Three or more evaluation modules are tested and an average of them is determined as a water permeability of the porous hollow-fiber membrane.

(4) Method of measuring a bubble point of a porous hollow-fiber membrane

A test module (effective length: 8 cm) is formed by sealing one end of a porous hollow-fiber membrane and fixing the other end to a metal cupla with a urethane resin to enable pressurization with air or nitrogen. A tube is attached to the test module and a 3M Novec 7200 highly-functional liquid (trade mark, product of 3M Japan) is poured in the tube to immerse the porous hollow-fiber membrane in the liquid.

A bubble point measurement device is equipped with a pressure control mechanism capable of pressurizing the inner surface side of the porous hollow-fiber membrane via the metal cupla and gradually increasing the pressure and a pressure indication mechanism. It is equipped with a flow meter capable of measuring the flow rate of a gas flowing out from the tube of the test module.

The metal cupla portion of the test module is attached to the end portion of the pressure mechanism and a flow-rate measurement mechanism line is attached to the end portion of the tube of the test module. The pressure (MPa) at the time when the flow rate of a gas leaked by gradual increase in pressure is 2.4 mL/min is detected. Three or more test modules are tested and an average of them is determined as a bubble point.

(5) Method of measuring virus LRV of a porous hollow-fiber membrane

The small membrane module shown in Fig. 1 of Japanese Patent Application Laid-Open No. 2013-17990 and having a membrane area of 0.001 $m^2$ is formed by a known technology.

A solution to be filtered is prepared by the method described below in (5-A) or (5-B).

(5-A) A virus-containing protein solution is prepared as follows. First, an antibody solution diluted with injection water (Otsuka Pharmaceutical) to give an antibody concentration of 1 mg/mL is prepared using a polyclonal antibody (human IgG) (Venoglobulin-1H, product of Benesis Corporation). The resulting solution is adjusted to have a salt concentration of 0.1 mol/L with a 1 mol/L aqueous NaCl solution. Further, with 0.1 mol/L HCl or 0.1 mol/L NaOH, the resulting solution is adjusted to have a hydrogen ion index (pH) of 4.0 and the resulting solution is used as a protein solution. To the resulting protein solution is added 1.0 vol% of porcine parvovirus (PPV, Veterinary Biological Product Association), followed by stirring well to obtain a virus-containing protein solution.

(5-B) As a virus-containing solution, an aqueous solution is obtained by adding 0.2% porcine parvovirus (PPV, type VR742, purchased from American Type Culture Collection (which will hereinafter be called ATCC)) to an aqueous solution of pH 4.5 and containing 0.02 mol/L acetic acid and 0.1 mol/L NaCl.

By a dead-end internal pressure filtration method using the 0.001-m² small membrane module and the aforementioned virus-containing protein solution or virus-containing solution, each prepared above, filtration is performed until the filtration amount reaches 150 L/m² when the aforementioned virus-containing protein solution (5-A) is used and filtration is performed until the filtration amount reaches 5 L/m² when the aforementioned virus-containing solution (5-B) is used and thus, a filtrate is obtained. Here, the filtration pressure is selected depending on the elastic limit pressure of the porous hollow-fiber membrane. A porous hollow fiber having an elastic limit pressure less than 200 kPa is filtered using 98 kPa as an appropriate pressure and a porous hollow fiber having an elastic limit pressure more than 200 kPa is filtered, using 196 kPa as an appropriate pressure.

Next, in order to measure a virus infectivity titer, prepared is a solution (which will hereinafter be called "3% FBS/D-MEM") of Dulbecco's Modified Eagle Medium (1X) (trade mark, product of Life Technologies Corporation, which will hereinafter be called "D-MEM"), liquid with 4.5 g/L D-Glucose, with L-Glutamine, without Sodium Pyruvate, containing 3% BenchMark Fetal Bovine Serum (trade mark, product of Gemini Bio-Products) inactivated by heating for 30 minutes in a water bath of 56°C and 1% PENICILLIN STREPTOMYCIN SOL (trade name, product of Life Technologies Corporation). A solution to be filtered and a filtrate are each collected and then diluted 10-fold, $10^2$-fold, $10^3$-fold, $10^4$-fold, and $10^5$-fold with 3% FBS-D-MEM.

Next, PK-13 cells (No. CRL-6489, purchased from ATCC) were diluted with 3% FBS/D-MEM to prepare a diluted cell suspension having a cell concentration of 2.0 x $10^5$ (cells/mL). The resulting suspension was dispensed, 100 μm each, in all the wells of ten 96-well round-bottom cell culture plates. In addition, the solution to be filtered, a diluted solution thereof, the filtrate, and a diluted solution thereof are dispensed, 100 μL each, in every 8 wells. Then, the cells are cultured for 10 days at 37°C and in a 5% carbon dioxide atmosphere.

The 50% tissue culture infectious dose ($TCID_{50}$) of the cells cultured for 10 days is measured using a red cell adhesion method (refer to Virus Experimental Studies, Introduction, ed. by Japanese National Institute of Health Student's Association, p. 173).

Described specifically, it is a method of diluting the banked chicken blood (trade name, product of Nippon Bio-Test Laboratories, Inc.) 5-fold with a PBS (-) adjustment solution of Dulbecco's PBS (-) powder (trade name, product of Nissui Pharmaceutical Co., Ltd.), removing a supernatant, which has been obtained by centrifugal separation at 2500 rpm and 4°C for 5 minutes, by suction, diluting the resulting precipitate 200-fold again with a PBS (-) adjustment solution, dispensing the resulting diluted solution, 100 μL each, into all the wells of the cell culture plate, allowing the plate to stand for 2 hours, and observing the adsorption of the red cell to the surface of the cell tissue to evaluate virus infection. Virus infection proportions of the solution to be filtered and the filtrate, and diluted solutions thereof are confirmed and the infectivity titer ($TCID_{50}$/mL) is calculated according to the Spearman-Karber calculation formula.

The logarithmic reduction value (LRV) of a virus is calculated based on $LRV=\log_{10}(C_O/C_F)$ in which $C_O$ is an infectivity titer of a solution to be filtered and $C_F$ is an infectivity titer ($TCID_{50}$/mL) of a filtrate obtained by filtration through a virus removal membrane.

The filtration rate of a virus-containing protein solution through a 0.001-m² membrane module is obtained by measuring a time until the filtration amount reaches 150 L/m² and calculating as a filtration amount (L/(m²·hr)) per m² of a membrane area and per hour.

(6) Method of measuring a water permeability of a 0.001-m² membrane module

A water permeability (L/(m²·hr)) per m² of a membrane area and per hour is calculated by preparing a 0.001-m² membrane module, filtering pure water which has passed an ultrafiltration membrane by internal pressure filtration and dead-end system at a temperature of 25°C and a transmembrane pressure difference of 98 kPa for 10 minutes, and weighing the filtrate.

(7) Method of measuring a gold colloid LRV of a 0.001-m² membrane module

A gold colloid solution to be filtered is prepared by diluting a solution AGP-HA20 (trade mark, product of Asahi Kasei Medical Co., Ltd.) containing a gold colloid having a particle size of about 20 nm with distilled water for injection (product of Ohtsuka Pharmaceutical) and a 0.27 mass% aqueous solution of SDS (sodium lauryl sulfate) and adjusting an absorbance at a wavelength of 526 nm to 1.00 measured by an ultraviolet-visible spectrophotometer (Model "UV-2450", product of Shimadzu Corporation).

A 0.001-m$^2$ membrane module is prepared and the gold colloid solution prepared above is filtered under the following conditions: temperature of 25°C, transmembrane pressure difference of 25 kPa, and a filtration amount of 2 L/m$^2$ by internal pressure filtration and dead-end system. A filtrate (0.5 L/m$^2$ to 2.0 L/m$^2$) is sampled.

The respective absorbances at a wavelength of 526 nm of the solution to be filtered and the filtrate are measured using an ultraviolet-visible spectrophotometer (model "UV-2450", product of Shimadzu Corporation) and a logarithmic reduction value (LRV) of the gold colloid particles is calculated according to the formula LRV= $\log_{10}$ (A/B) in which A represents the absorbance of the solution to be filtered and B represents the absorbance of the filtrate.

[Example 1]

Cotton linter (average molecular weight: 1.44 x 10$^5$) was dissolved in a cuprammonium solution prepared in a known manner, followed by filtration defoaming to prepare a spinning dope containing 7.5 mass% of cellulose, 4.4 mass% of ammonia, and 2.7 mass% of copper. An aqueous solution containing 38 mass% of acetone and 0.65 mass% of ammonia and an aqueous solution containing 28 mass% of acetone were prepared as an internal coagulation solution and an external coagulation solution, respectively.

The spinning dope (central spinning outlet) and the internal coagulation solution (outside spinning outlet) each prepared using an annular double spinneret were ejected at 3.78 mL/min and 0.69 mL/min, respectively and were introduced into the external coagulation solution flowing at 140 mL/min in a U-shaped funnel capillary having a diameter of 7 mm to form a hollow-fiber membrane. The resulting hollow-fiber membrane was taken up in water at a take-up rate (spinning rate) of 10 m/min. In the hollow fiber thus taken up, cellulose of a hollow-fiber membrane was regenerated in a 3 mass% aqueous solution of sulfuric acid, followed by washing with water. The water content of the resulting hollow-fiber membrane bundle was substituted with ethanol and then, the bundle was vacuum dried at 40°C and 3 kPa while being fixed at both ends thereof and stretched by 3.5% to obtain a porous hollow-fiber membrane of Example 1.

The elastic limit pressure, inner diameter (R), membrane thickness (t), water permeability, and bubble point of the resulting porous hollow-fiber membrane of Example 1 were measured by the aforementioned measurement methods, respectively and the measurement results are shown in Table 1. A graph drawn for finding the elastic limit pressure is shown in Fig. 2.

The resulting porous hollow-fiber membrane was cut in a round section by a freeze fracturing method and an observation photograph taken with a scanning electron microscope (Model "S-4700", product of Hitachi High-Tech Corporation) at a magnification of 2000x and an accelerating voltage of 1.0 kV is shown in Fig. 3.

Using the porous hollow-fiber membrane of Example 1, a small membrane module similar to that shown in Fig. 1 of Japanese Patent Application Laid-Open No. 2013-17990 and having a membrane area of 0.001 m$^2$ was formed by a known technology. The measurement results of the virus LRV (the virus-containing protein solution described above in (5-A) was used), water permeability, and gold colloid LRV of the resulting 0.001-m$^2$ membrane module are shown in Table 1.

Further, in order to confirm that the porous hollow fiber showed no change in its performance at an integrity test, a difference between the measurement results of the water permeability and gold colloid LRV after pressurizing the inner surface side of the porous hollow-fiber membrane of the resulting 0.001-m$^2$ membrane module with air at 250 kPa for 10 minutes while filling the outer surface side region of the porous hollow-fiber membrane and the measurement results obtained without the aforementioned pressurization is shown as an after-pressurization/before-pressurization ratio of water permeability and gold colloid LRV in Table 1.

The present inventors selected evaluation of gold colloid removal performance as an alternative method of evaluating virus removal performance, because the virus evaluation method has a measurement limit depending on a virus concentration in the target solution and moreover, the virus solution contains numerous non-infectious particles and the like so that it is preferred to evaluate the removability of gold colloid particles to judge a subtle difference in membrane structure.

[Examples 2 to 4 and Comparative Examples 1 and 2]

In a manner similar to that of Example 1 except that the production conditions of the porous hollow-fiber membrane, that is, the ejection amount of a spinning dope, the acetone concentration of the internal coagulation solution, the ammonia concentration of the internal coagulation solution, the ejection amount of the internal coagulation solution, the acetone concentration of the external coagulation solution, the ammonia concentration of the external coagulation solution, and the flow rate of the external coagulation solution were replaced by the conditions shown in Table 1, porous hollow-fiber membranes of Examples 2 to 4 and Comparative Examples 1 and 2 were produced.

Measurement results of the elastic limit pressure, inner diameter (R), membrane thickness (t), water permeability, and bubble point of the porous hollow-fiber membranes obtained in Examples 2 to 4 and Comparative Examples 1 and 2 and evaluation results of the virus LRV (the virus-containing protein solution described above in (5-A) was used), water permeability, and gold colloid particle removal of a 0.001-$m^2$ membrane module formed in a manner similar to that of Example 1 are shown in Table 1. The filtration rate of the virus-containing protein solution through the porous hollow-fiber membrane of Example 2 was 145 LMH. The filtration rate of the virus-containing protein solution through the porous hollow-fiber membrane of Comparative Example 1 was 73 LMH.

The round sections obtained by cutting the porous hollow-fiber membranes of Examples 2 to 4 were observed and photographed in a manner similar to that of Example 1 and they are shown in Figs. 4 to 6, respectively.

A graph created by plotting an elastic limit pressure relative to a ratio (R/t) of the inner diameter (R) to the membrane thickness (t), each of the porous hollow-fiber membranes of Examples 1 to 4 and Comparative Examples 1 and 2 is shown in Fig. 7. It has been confirmed that the porous hollow-fiber membrane shows high correlation between the ratio (R/t) of the inner diameter (R) to the membrane thickness (t) and the elastic limit pressure.

The porous hollow-fiber membranes of Examples 1 to 4 show an elastic limit pressure of 200 kPa or more and their ratio (R/t) of the inner diameter (R) to the membrane thickness (t) is 8.4 or less. The parvovirus LRV (the virus-containing protein solution described above in (5-A) was used) is 4.5 or more and thus shows a high value at 196 kPa filtration.

A change in the performance of the porous hollow-fiber membrane was studied using a 0.001-$m^2$ membrane module and applying a load by pressurization at 250 kPa for 10 minutes, which has revealed that the water permeability increased by about 10% and a gold colloid LRV showed a reduction of 0% to about 5%. This is presumed to occur because a load applied by pressurization slightly increased an average pore size, increased the water permeability a little, and caused a slight deterioration in the removal performance of a gold colloid. A change to such an extent is however permissible as a change in performance caused by the integrity test. Therefore, an integrity test can be used for the porous hollow-fiber membranes of Examples when a preset pressure is 250 kPa. In addition, it has been confirmed that in Examples 1 to 4, a ratio showing a gold colloid LRV change before and after application of a load by pressurization has a decreasing tendency below 1 with a reduction in elastic limit pressure of the porous hollow-fiber membrane, that is, a decreasing tendency of gold colloid LRV after application of a load by pressurization. Comparison between Example 3 and Example 4 has revealed that the preset pressure for an integrity test is more preferably about 80% or less of the elastic limit pressure of the porous hollow-fiber membrane.

In the porous hollow-fiber membrane of Comparative Examples 1 and 2, on the other hand, its elastic limit pressure is less than 200 kPa and its ratio (R/t) of an inner diameter (R) to a membrane thickness (t) is more than 8.4. Although the porous hollow-fiber membrane of Comparative Examples 1 and 2 has a preferable water permeability and parvovirus virus LRV (the virus-containing protein solution described above in (5-A) was used), a quality change before and after application of a load to the 0.001-$m^2$ membrane module by pressurization at 250 kPa for 10 minutes was a change which became a problem in practical use.

Described specifically, in Comparative Example 1, a change in water permeability is +11% and is therefore in a permissible range, but the porous hollow-fiber membrane has shown a rather high performance in gold colloid LRV after application of a load by pressurization. The reason is presumed because, though not restricted by a theory, plastic deformation occurred locally by pressurization and blocked pores. Evaluation of the virus removal performance of the porous hollow-fiber membrane higher than it should be as a result of the pressurization in the integrity test may cause such a problem that the membrane which should be judged disqualified in the integrity test may be judged qualified by mistake.

In Comparative Example 2, on the other hand, the water permeability after application of a load by pressurization increases by about 40% and the gold colloid LRV decreases by 10%. Therefore, an average pore size may obviously increase by plastic deformation. The 40% increase in the water permeability by pressurization during the integrity test is a change not permissible as a quality of the porous hollow-fiber membrane before and after the integrity test. In this case, the integrity test is not valid.

The integrity test of applying a load of 200 kPa or more to the porous hollow-fiber membranes of Comparative Examples 1 and 2 cannot therefore be employed.

[Example 5]

The porous hollow-fiber membrane of Example 2 was exposed, from the outside thereof, to an excimer laser processor (model "INDEX-800, product of Sumitomo Heavy Industries, Ltd., wavelength of 243 nm, rated output of 80 W, repetition frequency of 100 Hz, and pulse energy of 400 mJ) under the conditions of a spot diameter of 12 $\mu$m, fluence of 2.1 J/$cm^2$, and the number of shots of 150 times to form a pinhole having a diameter of about 3 $\mu$m in the porous hollow-fiber surface.

For the formation of a 0.001-m$^2$ membrane module of Example 2, about 12 to 13 porous hollow-fiber membranes were used. In Example 5, in a manner similar to that of Example 2 except that as one of the porous hollow-fiber membranes, a porous hollow-fiber membrane having a 3-$\mu$m diameter pinhole prepared as described above was used, a 0.001-m$^2$ membrane module of Example 5 was formed.

The outer surface side space of the porous hollow-fiber membrane of the 0.001-m$^2$ membrane module of Example 5 was filled with water and the inner surface side space of the porous hollow-fiber membrane was pressurized at 216 kPa. Then, generation of continuous air bubbles was visually found after approximately 30 seconds. Similarly, the outer surface side space of the porous hollow-fiber membrane of the 0.001-m$^2$ membrane module of Example 1 was filled with water and the inner surface side space of the porous hollow-fiber membrane was pressurized at 216 kPa, but generation of air bubbles was not found even after 60 seconds. The elastic limit pressure of the porous hollow-fiber membrane of Example 2 was 360 kPa so that 216 kPa was selected as a test pressure with 100 kPa or more to spare.

The parvovirus LRV (the virus-containing solution described above in (5-B) was used) of the 0.001-m$^2$ membrane module of Example 5 was measured using the aforementioned "virus LRV measurement method of a porous hollow-fiber membrane". As a result, its LRV was calculated to be 4.2.

From the results of the present example, it has been confirmed that in the integrity test of the 0.001-m$^2$ membrane module of Example 1 by visual leak detection, the module can be determined to pass the test when it does not generate continuous air bubbles by pressurization under the conditions of 216 kPa for 60 seconds.

[Comparative Example 3]

The outer-surface-side space of the porous hollow-fiber membrane of the 0.001-m$^2$ membrane module of Example 5 was filled with water and the inner-surface-side space of the porous hollow-fiber membrane was pressurized at 98 kPa. Generation of air bubbles was not found even after 60 seconds.

[Example 6]

A membrane module having a membrane area of 0.1 m$^2$, similar to that shown in Fig. 4 of Japanese Patent Application Laid-Open No. 2010-259992, was formed using the porous hollow-fiber membrane of Example 2 by a known technology.

The 0.1-m$^2$ membrane module of Example 6 was connected to a Planova leak tester (trade name, model "PLT-AM10", product of Asahi Kasei Medical Co., Ltd.) to pressurize the inner-surface-side space of the porous hollow-fiber membrane of the membrane module while filling the outer-surface-side space of the porous hollow-fiber membrane with water. A leak test of nine membrane module samples was performed at a pressure set at 196 kPa for the measurement time of 30 seconds. According to the results thus obtained, the average of pressure fluctuation values as measurement results was 43.6 Pa and the deviation was 8.7 Pa.

The Planova leak tester (trade name, model "PLT-AM10", product of Asahi Kasei Medical Co., Ltd.) is a device for measuring a pressure increase in the outer-surface-side space of the porous hollow-fiber membrane when the inner-surface-side space of the porous hollow-fiber membrane is maintained at a constant pressure.

Hollow fibers were prepared by forming a pinhole having a diameter of 3, 6, 9, 12, 15, 18, and 21 $\mu$m in the porous hollow-fiber membrane of Example 2 by an excimer laser processing method similar to that of Example 5, respectively. Then, 0.1-m$^2$ membrane modules each containing one of the porous hollow-fiber membranes having the aforementioned respective pinhole sizes were formed.

Based on the relation between the pinhole size and the parvovirus LRV (the virus-containing solution described above in (5-B) was used) of the 0.1-m$^2$ membrane modules each containing one of the porous hollow-fiber membranes having the aforementioned respective pinhole sizes, a pinhole diameter capable of achieving a parvovirus LRV of 4 or more was found to be 12.5 um or less. A leak test of the 0.1-m$^2$ membrane module containing one porous hollow-fiber membrane having a pinhole size of about 12 $\mu$m in diameter was performed in a manner similar to that described above with a Planova leak tester (trade name, model "PLT-AM10", product of Asahi Kasei Medical Co., Ltd.) and as a result, a pressure fluctuation value was 3450 Pa. The value was sufficiently high compared with 43.6 Pa which was an average pressure fluctuation value of a normal 0.1-m$^2$ membrane module not containing a pinhole hollow fiber. By providing an appropriate threshold value for a pressure fluctuation value, therefore, it is possible to determine whether or not a 0.1-m$^2$ membrane module has parvovirus LRV performance of 4 or less by using the leak tester for the integrity test.

[Example 7]

The 0.1-m$^2$ membrane module of Example 6 was connected to Palltronic Flowstar (trade name, Type-IV, product of Pall Corporation, measured value displayed: second decimal place, measurement range: 0.1 to 1000 mL/min) to pressurize the inner-surface-side space of the porous hollow-fiber membrane while filling the outer-surface-side space of the porous hollow-fiber membrane with water. A leak test of nine membrane module samples was performed at a pressure set at 196 kPa for the measurement time of 15 minutes. According to the results thus obtained, the average of air flow rate variation values as measurement results was 0.105 mL/min and the deviation was 0.030 mL/min.

The Palltronic Flowstar (trade name, Type-IV, product of Pall Corporation) is equipped with a mechanism of supplying air to compensate for a pressure reduction caused by diffusion to a porous hollow-fiber membrane when the inner-surface-side space of the membrane is maintained at a constant pressure and it is a device for measuring the flow rate of the supplied air with a flowmeter.

Using this device, a leak test of a 0.1-$m^2$ membrane module formed in Example 6 and containing one porous hollow-fiber membrane having a pinhole size of about 12 $\mu$m in diameter was performed by a method similar to that described above. The air flow rate variation value as a measurement result was 4.35 mL/min, which was sufficiently higher than 0.105 mL/min which was an average air flow rate variation value of a normal 0.1-$m^2$ membrane module not containing a pinhole hollow fiber. This shows that by providing a threshold value for an air flow rate variation value as needed in consideration of the average value and deviation, it is possible to determine whether or not a 0.1-$m^2$ membrane module has parvovirus LRV performance of 4 or less by using the device for the integrity test.

[Example 8]

The 0.1-$m^2$ membrane module of Example 6 was connected to Sartocheck (trade name, Type-4Plus, product of Sartorius AG, measured value displayed: the first decimal place, measurement range: 0.1 to 3000 mL/min) to pressurize the inner-surface-side space of the porous hollow-fiber membrane of the membrane module while filling the outer-surface-side space of the porous hollow-fiber membrane with water. A leak test of nine membrane module samples was performed at a pressure set at 196 kPa for the measurement time of 15 minutes. According to the results thus obtained, the average air flow rate variation value as measurement results was 0.24 mL/min and the deviation was 0.05 mL/min.

The Sartocheck (trade mark, Type-4Plus, product of Sartorius AG) is a device for measuring a pressure reduction caused by diffusion to the membrane when the inner-surface-side space of the porous hollow-fiber membrane is maintained at a constant pressure and finding, based on the information on the volume of the inner-surface-side space, the pressure reduction in terms of a diffusion flow rate.

With the aforementioned device, a leak test of the 0.1-$m^2$ membrane module formed in Example 6 and containing one porous hollow-fiber membrane having a pinhole size, in diameter, of about 12 $\mu$m was performed by a method similar to that described above. As a result, an air flow rate variation value was 4.5 mL/min. The value was sufficiently higher than 0.24 mL/min which was an average air flow rate variation value of a normal 0.1-$m^2$ membrane module not containing a pinhole hollow fiber. This shows that by providing a threshold value for air flow rate variation value as needed in consideration of its average and deviation, it is possible to determine whether or not a 0.1-$m^2$ membrane module has parvovirus LRV performance of 4 or less by using the aforementioned device for an integrity test.

[Comparative Example 4]

In a manner similar to that of Example 7 and Example 8 except that in the measurement of an air flow rate variation value using nine 0.1-$m^2$ membrane module samples formed in Example 6, the pressure was set at 98 kPa instead of 196 kPa, an air flow rate variation value was measured. As a result, an air flow rate variation value did not reach 0.10 mL/min when measured with the device of Example 7 and an air flow rate variation value was 0.0 mL/min or 0.1 mL/min when measured with the device of Example 8. From the measurement results showing that they did not reach 0.1 mL/min, that is, a measurement lower limit of those devices, it was impossible to confirm that measurement of a normal membrane module was performed correctly. In addition, an appropriate threshold value cannot be provided for the measured value of the normal membrane module and that of the 0.1-$m^2$ membrane module containing a hollow fiber with a pinhole formed therein, showing that using those devices under the condition of 98 kPa was not suited.

[Example 9]

In a manner similar to that of Example 2 except that, in the measurement of a parvovirus LRV (the virus-containing protein solution described above in (5-A) was used) using the 0.001-$m^2$ membrane module, obtaining a filtrate after completion of the filtration of 150 L/$m^2$ was replaced by obtaining a filtrate by, after completion of the filtration of 150 L/$m^2$, releasing a pressure for 3 hours and then performing filtration of 15 L/$m^2$ at an increased pressure, a parvovirus LRV was measured. According to the evaluation of six evaluation modules, the parvovirus LRV of any of them was judged to be 5.3 or more.

[Example 10]

In a manner similar to that of Example 9 except that, in the measurement of a parvovirus LRV (the virus-containing protein solution described above in (5-A) was used), a filtration pressure was changed from 196 kPa to 150 kPa, six evaluation modules were measured. As a result, the parvovirus LRV of any of them was judged to be 5.3 or more.

[Example 11]

In a manner similar to that of Example 9 except that, in the measurement of a parvovirus LRV (the virus-containing protein solution described above in (5-A) was used), the filtration pressure was changed from 196 kPa to 98 kPa, six evaluation modules were measured. As a result, five of the six modules were judged to have a parvovirus LRV of 5.3 or more, and one was judged to have a parvovirus LRV of 4.1.

[Table 1]

| | Ex. 1 | Ex. 2 | Ex. 3 | Ex. 4 | Comp. Ex. 1 | Comp. Ex. 2 |
|---|---|---|---|---|---|---|
| Spinning dope ejection amount (mL/min) | 3.78 | 3.62 | 3.58 | 2.93 | 3.65 | 3 |
| Acetone concentration of internal coagulation solution (mass%) | 38 | 38 | 38 | 38 | 38 | 45 |
| Ammonia concentration of internal coagulation solution (mass%) | 0.65 | 0.65 | 0.65 | 0.65 | 0.65 | 0.7 |
| Internal coagulation solution ejection amount (mL/min) | 0.69 | 1.11 | 1.32 | 1.11 | 1.8 | 1.75 |
| Acetone concentration of external coagulation solution (mass%) | 28 | 28 | 28 | 28 | 28 | 37.5 |
| Ammonia concentration of external coagulation solution (mass%) | 0 | 0 | 0 | 0 | 0 | 0.1 |
| External coagulation solution flow rate (mL/min) | 140 | 140 | 140 | 140 | 140 | 160 |
| External coagulation solution temperature (°C) | 40 | 38 | 36 | 33 | 28.5 | 26 |
| Elastic limit pressure (kPa) | 490 | 360 | 305 | 257 | 180 | 108 |
| Inner diameter (R, $\mu$m)<br>Membrane thickness (t, $\mu$m)<br>(Inner diameter)/(membrane thickness) ratio (R/t) | 239.9<br>49.6<br>4.8 | 279.8<br>45.0<br>6.2 | 313.0<br>40.5<br>7.7 | 287.8<br>36.2<br>8.0 | 381.2<br>38.3<br>10.0 | 330.3<br>27.0<br>12.2 |
| Water permeability (L/(m$^2$·hr)) *1 | 15.4 | 30.8 | 37.5 | 40.3 | 44.8 | 24.8 |
| Bubble point (MPa) | 2.28 | 1.89 | 1.56 | 1.43 | 1.36 | 1.59 |
| Parvovirus (PPV) LRV | >5.5 | >5.5 | 5.4 | 4.5 | 4.5 | 5.0 |
| 0.001-m$^2$ membrane module water permeability (L/(m$^2$·hr)) *2<br>0.001-m$^2$ membrane module water permeability (L/(m$^2$·hr)) *2, after pressurized at 250 kPa for 10 min. | 40.5<br>45.5<br>1.12 | 58.9<br>64.9<br>1.11 | 65.7<br>72.0<br>1.10 | 75.3<br>83.2<br>1.10 | 63.3<br>70.5<br>1.11 | 46.6<br>64.8<br>1.39 |
| Change in water permeability, by pressurization at 250 kPa for 10 min (after/before ratio) | | | | | | |
| 0.001-m$^2$ membrane module gold colloid LRV 0.001-m$^2$ membrane module gold colloid LRV after pressurization at 250 kPa for 10 min.<br>Change in gold colloid LRV by pressurization at 250 kPa for 10 min (after/before ratio) | 2.18<br>2.17<br>1.00 | 1.73<br>1.71<br>0.99 | 1.44<br>1.41<br>0.98 | 1.32<br>1.24<br>0.94 | 1.70<br>1.84<br>1.08 | 1.77<br>1.60<br>0.90 |
| *1: filtration conditions: 27 kPa and 37°C   *2: filtration conditions: 98 kPa and 25°C | | | | | | |

Industrial Applicability

The present invention is suited as a porous hollow-fiber membrane containing a regenerated cellulose and an integrity test method singly using a leak test method can be applied to this porous hollow-fiber membrane.

**Claims**

1. A porous hollow-fiber membrane containing a regenerated cellulose and having an elastic limit pressure of 200 kPa or more.

2. The porous hollow-fiber membrane according to claim 1, wherein a ratio (R/t) of an inner diameter (R) to a membrane thickness (t) of the porous hollow-fiber membrane is 8.4 or less.

3. The porous hollow-fiber membrane according to claim 1 or 2, wherein the membrane thickness (t) of the porous hollow-fiber membrane is in a range of 20 um or more and 70 um or less.

4. The porous hollow-fiber membrane according to any one of claims 1 to 3, wherein the regenerated cellulose is obtained by a cuprammonium process.

5. The porous hollow-fiber membrane according to any one of claims 1 to 4, wherein a pore size on an inner surface of the porous hollow-fiber membrane is larger than a pore size on an outer surface.

6. The porous hollow-fiber membrane according to any one of claims 1 to 5, wherein the porous hollow-fiber membrane has a gradient structure in which a pore size becomes smaller from an inner surface side to an outer surface side.

7. The porous hollow-fiber membrane according to any one of claims 1 to 6, wherein a water permeability at a filtration pressure of 27 kPa and 37°C is 10 L/($m^2$·hr) or more and 50 L/($m^2$·hr) or less.

8. The porous hollow-fiber membrane according to any one of claims 1 to 7, wherein a bubble point is 1.2 MPa or more.

9. The porous hollow-fiber membrane according to any one of claims 1 to 8, which is used for virus removal.

10. The porous hollow-fiber membrane according to claim 9, wherein a parvovirus removal ratio (LRV) is 4.0 or more.

11. A method of filtering a biological preparation-containing liquid with the porous hollow-fiber membrane according to any one of claims 1 to 10, wherein a transmembrane pressure difference of the porous hollow-fiber membrane during filtration is 150 kPa or more.

12. An integrity test method of a membrane module filled with the porous hollow-fiber membrane according to any one of claims 1 to 10, wherein:

    the membrane module has an outer-surface-side space which is in contact with an outer surface of the porous hollow-fiber membrane and an inner-surface-side space which is in contact with an inner surface which is in contact with an inner surface of the porous hollow-fiber membrane, and
    the method comprises filling the outer-surface-side space with a liquid, and
    pressurizing the inner-surface-side space with air so that a transmembrane pressure difference of the porous hollow-fiber membrane is within a range of more than 98 kPa and not more than an elastic limit pressure of the porous hollow-fiber membrane.

13. The integrity test method according to claim 12, comprising a step of visually observing an air bubble generated from the porous hollow-fiber membrane.

14. The integrity test method according to claim 12, comprising a step of measuring a pressure fluctuation value of either one of the outer-surface-side space and the inner-surface-side space, or measuring an air inflow amount required for keeping a pressure of either one of the spaces constant.

Fig. 1

Fig. 2

Fig. 3

Fig. 4

Fig. 5

# Fig. 6

# Fig. 7

$y = -49.18x + 686.59$
$R^2 = 0.9543$

## INTERNATIONAL SEARCH REPORT

| International application No. |
| --- |
| **PCT/JP2021/044385** |

**A. CLASSIFICATION OF SUBJECT MATTER**

*B01D 63/02*(2006.01)i; *B01D 65/10*(2006.01)i; *B01D 69/02*(2006.01)i; *B01D 69/08*(2006.01)i; *B01D 71/10*(2006.01)i; *G01M 3/26*(2006.01)i; *D01F 2/00*(2006.01)i; *D01F 2/04*(2006.01)i
FI: B01D71/10; B01D63/02; B01D69/02; B01D69/08; D01F2/00 A; D01F2/04 A; G01M3/26 Z; B01D65/10

According to International Patent Classification (IPC) or to both national classification and IPC

**B. FIELDS SEARCHED**

Minimum documentation searched (classification system followed by classification symbols)

B01D63/02; B01D65/10; B01D69/02; B01D69/08; B01D71/10; G01M3/26; D01F2/00; D01F2/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 4-029727 A (ASAHI CHEM IND CO LTD) 31 January 1992 (1992-01-31) | 1-6 |
| | examples | |
| Y | | 5-6, 12-14 |
| A | | 7-11 |
| X | JP 1-254205 A (ASAHI CHEM IND CO LTD) 11 October 1989 (1989-10-11) | 1-6 |
| | claims, example 2 | |
| Y | | 5-14 |
| X | JP 1-254204 A (ASAHI CHEM IND CO LTD) 11 October 1989 (1989-10-11) | 1-6 |
| | claims, example 2 | |
| Y | | 5-14 |
| X | JP 63-102676 A (ASAHI CHEM IND CO LTD) 07 May 1988 (1988-05-07) | 1-6 |
| | claims, example 4 | |
| Y | | 5-14 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 January 2022** | **01 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/044385**

C.    DOCUMENTS CONSIDERED TO BE RELEVANT

| Category* | Citation of document, with indication, where appropriate, of the relevant passages | Relevant to claim No. |
|---|---|---|
| X | WO 2008/156124 A1 (ASAHI KASEI KABUSHIKI KAISHA) 24 December 2008 (2008-12-24) claims, paragraph [0316] | 1-6 |
| Y | | 5-14 |
| Y | WO 2015/156403 A1 (ASAHI KASEI MEDICAL CO LTD) 15 October 2015 (2015-10-15) claims 5, 7, 9, paragraph [0125], fig. 5 | 5-11 |
| Y | WO 2007/102427 A1 (MANABE, Seiichi) 13 September 2007 (2007-09-13) paragraphs [0038]-[0045] | 12-14 |
| A | WO 2005/084785 A1 (ASAHI KASEI PHARMA CORPORATION) 15 September 2005 (2005-09-15) | 1-14 |

Form PCT/ISA/210 (second sheet) (January 2015)

**INTERNATIONAL SEARCH REPORT**
Information on patent family members

International application No.

**PCT/JP2021/044385**

| Patent document cited in search report | | | Publication date (day/month/year) | Patent family member(s) | Publication date (day/month/year) |
|---|---|---|---|---|---|
| JP | 4-029727 | A | 31 January 1992 | (Family: none) | |
| JP | 1-254205 | A | 11 October 1989 | (Family: none) | |
| JP | 1-254204 | A | 11 October 1989 | (Family: none) | |
| JP | 63-102676 | A | 07 May 1988 | (Family: none) | |
| WO | 2008/156124 | A1 | 24 December 2008 | US 2010/0190965 A1<br>claims, paragraphs [0527]-[0528] | |
| WO | 2015/156403 | A1 | 15 October 2015 | US 2017/0029462 A1<br>claims 5, 7, 9, paragraphs [0157]-[0158], fig. 5<br>EP 3130392 A1<br>KR 10-2016-0087891 A<br>CN 105980037 A | |
| WO | 2007/102427 | A1 | 13 September 2007 | US 2009/0145831 A1<br>paragraphs [0067]-[0077]<br>EP 2006016 A1<br>CN 101394917 A | |
| WO | 2005/084785 | A1 | 15 September 2005 | US 2005/0229681 A1 | |

Form PCT/ISA/210 (patent family annex) (January 2015)

## REFERENCES CITED IN THE DESCRIPTION

**Patent documents cited in the description**

- WO 2015156401 A
- WO 2017170874 A
- JP 7132215 A
- JP 2013017990 A
- JP 2010259992 A

**Non-patent literature cited in the description**

- Virus Experimental Studies, Introduction. 173